(19) Europäisches Patentamt
European Patent Office
Office européen des brevets

(11) **EP 4 332 386 A1**

(12) **EUROPEAN PATENT APPLICATION**

(43) Date of publication:
**06.03.2024 Bulletin 2024/10**

(21) Application number: **22193388.0**

(22) Date of filing: **01.09.2022**

(51) International Patent Classification (IPC):
**F15D 1/00** (2006.01)     **H05H 1/24** (2006.01)
**B64C 23/00** (2006.01)

(52) Cooperative Patent Classification (CPC):
**F15D 1/0075; B64C 23/005; H05H 1/2439;**
**H05H 1/47; B64C 2230/12; H05H 1/2418**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Karlsruher Institut für Technologie
76131 Karlsruhe (DE)**

(72) Inventors:
• **Serpieri, Jacopo
  76131 Karlsruhe (DE)**

• **Hehner, Marc
  71229 Leonberg (DE)**
• **Kriegseis, Jochen
  71134 Aidling (DE)**
• **Pasch, Saskia
  76133 Karlsruhe (DE)**
• **Gatti, Davide
  76137 Karlsruhe (DE)**

(74) Representative: **Müller-Boré & Partner
Patentanwälte PartG mbB
Friedenheimer Brücke 21
80639 München (DE)**

(54) **DEVICE AND METHOD FOR FLOW FORCING OF A FLUID**

(57)     An aspect of the present invention relates to a device (10) for flow forcing of a fluid, the device comprising: a first electrode arrangement (A), in particular a set of dielectric barrier discharge plasma actuators or a set of corona discharge plasma actuators, the first electrode arrangement (A) comprising: a reference electrode (12) having a length extending along a first axis and a width extending along a second axis perpendicular to the first axis; a first array (14a) of electrodes (Ea) disposed at the reference electrode (12) and arranged substantially along the first axis; and wherein the reference electrode (12) is insulated from the first array (14a) and all electrodes of the first array (14a) are insulated from each other; wherein the device (10), in particular the first electrode arrangement (A), when the electrodes (Ea) of the first array and/or the reference electrode (12) are supplied with a plurality of voltage signals, is configured to generate, in the fluid: a stationary fluid wave being aligned substantially along the first axis, oscillating substantially along the second axis and being stationary substantially along the first axis; or a travelling fluid wave being aligned substantially along the first axis, oscillating substantially along the second axis and propagating sub-stan-tially along the first axis. Further aspects of the present invention relate to a method for flow forcing of a fluid and a use of said device for flow forcing of a fluid.

Figure 1

**Description**

The present invention relates to a device for flow forcing of a fluid, a method for flow forcing of a fluid, and a use of said device for flow forcing of a fluid.

Turbulent flows, for example, over aerodynamic surfaces account for about 50% of the total drag encountered by general-aviation airplanes. Even a slight reduction of this drag leads to considerable savings in terms of consumed fuel with related benefits in terms of pollution and costs savings.

Passive flow control devices as riblets and shark skin installed on the flow exposed surfaces can achieve considerable drag reduction. Nonetheless, passive flow-control devices are designed for optimal performance and underperform when operated outside of the design point. Moreover, their control effect cannot be stopped when unneeded or detrimental. Therefore, their overall performance is often sub-optimal.

Active flow control is instead based on the approach to actively invest energy to operate flow actuators whose effect leads to energy savings that overcome the energy needed for their operation. However, such flow actuators are complex and expensive.

Thus, it is a problem to be solved by the present invention to provide a device and a method for efficient flow control of a fluid.

This problem is solved by the independent claims. Specific embodiments result from the respective dependent claims.

An aspect of the present invention relates to a device for flow forcing of a fluid, the device comprising:

- a first electrode arrangement, in particular a set of dielectric barrier discharge plasma actuators or a set of corona discharge plasma actuators, the first electrode arrangement comprising:

  - a reference electrode having a length extending along a first axis and a width extending along a second axis perpendicular to the first axis;
  - a first array of electrodes disposed at the reference electrode and arranged substantially along the first axis; and
  - wherein the reference electrode is insulated from the first array and all electrodes of the first array are insulated from each other;

- wherein the device, in particular the first electrode arrangement, when the electrodes of the first array and/or the reference electrode are supplied with a plurality of voltage signals, is configured to generate, in the fluid:

  - a stationary fluid wave being aligned substantially along the first axis, oscillating substantially along the second axis and being stationary substantially along the first axis; or
  - a travelling fluid wave being aligned substantially along the first axis, oscillating substantially along the second axis and propagating substantially along the first axis.

Advantageously, the device according to the aforesaid aspect allows for a reduction of the drag exerted by a turbulent stream over a flow-exposed surface. In particular, it allows for inducing flow motions in a fluid and modulation of these motions. The motions correspond to waves induced in the fluid. The device allows for simply adjusting and/or modifying the parameters of said waves such as amplitude and/or wavelength and/or frequency and/or phase velocity magnitude and direction. By generating these waves in a turbulent fluid flow by means of the above-mentioned device, the drag caused by the interaction between the flow turbulent structures and the flow-exposed surface may be reduced efficiently.

The device may also be used to enhance mixing of fluid species or of particles within a flow since the device may increase the turbulence level of a flow or of a fluid at rest. The device may also be used to increase the heat transfer between the fluid and the flow-exposed surface.

Furthermore, the device can be manufactured in a simple, straightforward and cost-efficient manner. The operation and/or maintenance costs of the device may also be kept low.

Herein, the device may also be referred to as "actuator".

Herein, the term "flow" refers to the movement of particles, particularly fluid particles, such as atoms, molecules, ions, electrons, etc.

Herein, the term "substantially" means that manufacturing tolerances are also included. Specifically, "substantially in a direction" or "substantially along a direction" or "substantially along an axis" includes an exact alignment in or along the direction or axis as well as deviations from the direction or axis. The deviations may for example be in a range from about -5 to about 5 degrees. Particularly, the deviations may be in a range from about -2 to about 2 degrees. More particularly, the deviations may be in a range from about -1 to about 1 degrees. The term "substantially" may include tolerances of about -5 to about +5 percent.

Herein, the first and second axis may relate to the x- and y-axis of a three-dimensional orthogonal (cartesian) coordinate system, respectively, the coordinate system being for example bound to Earth.

Herein, the term "electrode" refers to an electrically conductive layer, such as a metal plate or sheet, which may have a rectangular, in particular quadratic, or circular contour or shape in a top-down view of the electrode. The electrodes may also have rounded corners to reduce the electrons accumulation effect caused by large curvatures of the electrodes and related potential differences. The top-down view may refer to a third axis being perpendicular to the first and second axis so that the first, second and third axes form a three-dimensional orthogonal cartesian system.

Herein, all axes refer to a three-dimensional orthonormal xyz coordinate system which may be bounded to Earth or another surface, such as the top surface of a wing of an aircraft. The first axis is aligned with the x-axis of said xyz coordinate system. The second axis is aligned with the y-axis of said xyz coordinate system. The third axis is aligned with the z-axis of said xyz coordinate system.

Herein, the term "insulated" may comprise the situations where the electrodes are insulated by a dielectric medium or just by separation, for instance by vacuum or air between the electrodes.

Herein, the term "aligned" may include that the wavenumber vector or wave vector or k-vector of the generated fluid wave may be arranged or oriented substantially in parallel or parallel to the first axis.

Herein, the term "stationary fluid wave" may also be referred to as "standing fluid wave". The term "stationary" or "standing" means that the wave does not propagate, in particular in time, substantially along the first axis. The wave has spatially fixed points of substantially zero amplitude.

According to the above-mentioned aspect, along the first axis, the length of the reference electrode is measured or determined and, along the second axis, the width of the reference electrode is measured or determined.

The first axis may determine the wave vector or k-vector of the generated fluid wave. It may coincide with the main flow-advection direction of the fluid. The second axis may determine the oscillation direction of the induced fluid wave. Movement along the first axis may be referred to as "streamwise". Movement along the second axis may be referred to as "crossflow". Movement along the third axis may be referred to as along or in "wall-normal direction".

The first, second and third axis may also refer to a three-dimensional coordinate system which may be bounded to a wing of an aircraft. In this case the first axis may extend from the leading edge to the trailing edge of the wing of the aircraft substantially in parallel to the body of the aircraft. Specifically, the lengthwise direction of the body may correspond to and/or be aligned with the first direction. The body of the aircraft may for example be the airplane fuselage.

The fluid may be a liquid, in particular an ionizable liquid, or a gas, in particular an ionizable gas such as air. The fluid may be flowing substantially along the first axis, in particular in the vicinity of the device. Alternatively, the fluid may not be flowing, in particular not in the vicinity of the device. The flowing fluid may be of turbulent nature in the vicinity of the device.

Herein, the term "vicinity" may refer to a region within a distance from the device or the electrodes of the device, in particular one or all electrodes, of about 1 $\mu$m to about 10 cm, particularly about 100 $\mu$m to about 1 cm, more particularly about 0.1 mm to about 5 mm. The region may be within a range of 0 to 1 $\mu$m from the device or the electrodes of the device.

Preferably, the device further comprises an insulating substrate, in particular a dielectric layer, at which the first electrode arrangement is arranged. The dielectric layer may be made of a polymer material, such as polyethylene terephthalate or any dielectric resin, or any other suitable electrically insulating material.

According to the above-mentioned aspect, the reference electrode may be a low-voltage electrode or a grounded electrode, i.e. an electrode at the ground voltage level. The reference electrode may be supplied with a low voltage signal. It may be connected to a low voltage source or to the ground, particularly as a reference voltage. The term "ground" or "grounded" refers herein to a base potential or connection to a base potential.

The reference electrode may be supplied with a high voltage signal such that, when operated, the voltage difference or potential difference between the reference electrode and the operated electrodes of the first array is large enough to cause an electric field capable of locally ionizing the operated fluid.

Alternatively, the reference electrode may be supplied with a high voltage signal and the electrodes of the first array may be supplied with a low-voltage signal to generate a plasma discharge.

The reference electrode may be exposed to an ionizable medium such as air. It may be exposed to a fluid, particularly to a flowing fluid. The reference electrode may not be covered with or by a layer separating the reference electrode from said medium or fluid. Likewise, the electrodes of the first array, in particular a part of or all the electrodes, may be exposed to the fluid.

The reference electrode may be installed, in particular directly on the dielectric layer. Alternatively, the reference electrode may be glued, printed, spray-deposited or chemically hatched on the dielectric layer.

The electrodes of the first array of electrodes, in particular all electrodes, may have a length extending substantially along the second axis and a width extending substantially along the first axis.

In particular, at least a part of the electrodes or all the electrodes of the first array can be disposed at the reference electrode with respect to the second axis. That is, the electrodes of the first array each extend substantially along the second axis.

The first array may be disposed below the dielectric layer. Each electrode of the electrodes of the first array may either be installed, in particular directly on the dielectric layer, or be glued, printed, spray-deposited or chemically hatched on the dielectric layer, particularly on the opposite or bottom side of the reference electrode. All electrodes of the first array may be arranged substantially in parallel to each other along the first axis. Adjacent electrodes of at least a part or all of the electrodes of the first array may be spaced apart from each other. The electrodes, in particular all electrodes, of the first array may each be embedded or encapsulated in an electrically insulating material. The electrodes, in particular all electrodes, of the first array may be embedded, or encapsulated, in the dielectric layer.

The first electrode arrangement may be a dielectric barrier discharge (DBD) plasma actuator or a set of dielectric barrier discharge plasma actuators or a corona discharge (CD) plasma actuator or a set of corona discharge plasma actuators.

The reference electrode and the electrodes of the first array may be electrically insulated from each other by a separation distance or gap, and/or by an electrically insulating medium.

The electrodes of the first array may be comprised by or grouped into electrode sets.

In an embodiment, the first array may comprise at least three, preferably four, electrodes.

In another embodiment, the electrodes of the first array may be separated from the reference electrode by a gap, wherein the gap is in particular filled with an insulating, in particular electrically insulating, medium.

In another embodiment, in a cross-sectional view of the device along the first axis, the electrodes of the first array may have an overlap with the reference electrode along the second axis. In other words, along a third axis perpendicular to the first and second axis, at least a part of the reference electrode may be disposed above or below the electrodes of the first array. The electrodes of the first array may be disposed adjacent to the reference electrode substantially along the second axis. The reference electrode and the first array may be disposed at the same level along the third axis. Alternatively, the reference electrode and the first array may be disposed adjacent to each other along the third axis. The reference electrode and the first array may be disposed at different levels with respect to the third axis.

The device may have a rectangular, in particular quadratic, contour in a plan view or top-down view of the device. The device may have a length along a first edge of the contour in a range from about 6 cm to about 12 cm. The length along the first edge may be of about 8 cm. The device may have a length along a second edge of the contour substantially perpendicular to the first edge in a range from about 6 cm to 12 cm. The length along the second edge may be of about 8 cm. The length may also be in the range of about 1 m to about 10 m. The device may have a wing-like or fuselagelike contour in a plan view or top-down view. The device may preferably cover an entire flow-exposed surface of a moving object, such as the entire outside surface of a train or an entire wing of an airplane or an entire fuselage of an airplane. The device could also cover the internal walls of a flow-containing pipe or duct. The device could be made of any size depending on the application of the device.

The plurality of voltage signals may be preset or closed-loop controlled.

In a specific embodiment, the device may further comprise a flow forcing unit being configured to supply the plurality of voltage signals being high-voltage signals, in particular periodic signals, to the electrodes of the first array, each signal of the plurality of high-voltage signals having a preset mathematical function and a preset phase and a preset amplitude and a preset frequency, wherein the signals of the plurality of high-voltage signals in particular have a phase relation with respect to each other corresponding to the preset phase of each signal of the plurality of high-voltage signals.

Advantageously, according to this embodiment, many different waveforms of the fluid wave may be generated. Various practicable or feasible waveforms may be generated. The electric fields that arise from supplying the high-voltage signals to the electrodes of the first array create local fluid oscillations. The local fluid oscillations represent the discretization of a global fluid oscillation, specifically a fluid wave, substantially along the first axis. The local fluid oscillations constitute the global fluid oscillation or fluid wave.

In particular, each signal of the plurality of high-voltage signals having preset mathematical functions and preset phases and preset amplitudes and preset frequencies, wherein the signals of the plurality of high-voltage signals in particular have a phase relation with respect to each other related to the preset phase of each signal of the plurality of high-voltage signals.

The plurality of high-voltage signals may have preset mathematical functions, phases, amplitudes and frequencies.

The flow forcing unit may be connected to or comprise or consist of at least one voltage source, in particular a high-voltage source. Herein, the term "high-voltage" refers to the range of about 0.1 to about 50 kV.

The flow forcing unit may comprise a control unit configured to control the fluid wave, in particular the waveform of the fluid wave. The control unit may be configured to control the voltage signals supplied to the operated electrode sets so to generate the desired fluid wave. The control unit may be configured to set and/or adjust the parameters of the fluid wave generated in the fluid, such as the wavelength and/or the frequency and/or the amplitude and/or the propagation velocity magnitude and/or the propagation velocity direction and/or the spacing of the induced fluid waves along the second axis. The control unit may be external to the flow forcing unit. The control unit may be comprised by the device. The control unit may be or comprise a computer unit comprising one or more processors and/or memory units. The parameters of the fluid wave may be set and/or adjusted by user input and/or automatically by the control unit.

The flow forcing unit or the device may further comprise at least one flow sensor configured to measure the flow of the fluid. The control unit may be configured to control the fluid wave, in particular the waveform of the fluid wave, in response to a flow measurement by the at least one flow sensor. The control unit may be configured to set and/or adjust the parameters of the fluid wave in response to the flow measurement by the at least one flow sensor. The at least one flow sensor may for example detect the onset of a turbulent flow region or the flow velocity of the turbulent flow in the fluid and the control unit may set and/or adjust the waveform of a fluid wave to be generated, in particular the parameters of the fluid wave to be generated, in the fluid by the flow forcing unit to reduce or enhance the drag exerted by the turbulent flow or the heat flux between the turbulent flow and the flow-exposed surfaces.

In an embodiment, the waveform of the fluid wave substantially along the first axis may correspond to the composition of the plurality of high-voltage signals supplied to the electrodes of the first array substantially along the first axis. The term "the waveform of the fluid wave substantially along the first axis" may relate to fluid oscillations substantially along the second axis and evolution substantially along the first axis. Furthermore, the term "composition of the plurality of high-voltage signals supplied to the electrodes" may relate to the composition of the device-induced flow motions generated when the device electrodes are supplied with a plurality of high-voltage signals. The waveform of the fluid wave may correspond to the composition of the forced fluid jets caused by supplying the electrodes of the first array with the plurality of high-voltage signals. Hereinafter, the term "jet" refers to local, spatio-temporal manifestations of fluid motions.

In another embodiment, the flow forcing unit is configured such that at least three signals of the plurality of high-voltage signals supplied to the first array have a different phase and the same or a different amplitude. Preferably, the at least three signals each have the same mathematical function, the same frequency and the same amplitude and different phases. The at least three signals may also have the same mathematical functions, the same frequencies and the same amplitudes and different phases. Each of the at least three signals may include a modulation function and carrier function, each having a phase, frequency and amplitude.

In another embodiment, all signals of the plurality of high-voltage signals correspond to the same preset mathematical function.

Phrased differently, the shape of the mathematical function of the signals may be the same for all the signals.

According to the above-mentioned aspect, the fluid wave refers to a matter wave of particles in the fluid, in particular ionized particles and/or charged particles and/or neutral particles.

One signal of the plurality of high-voltage signals may be supplied to at least a part of the electrodes or one electrode of the first array.

The signals, in particular all signals, of the plurality of high-voltage signals may be periodic signals. The signals may for example be a sine or a cosine or any suitable periodic function. The signals may also be or comprise a modulation of said functions. The function type, the phase, the frequency and the amplitude may be preset by user input, for example at the flow forcing unit, or automatically, for example by the flow forcing unit. The mathematical function, the phase, the frequency and the amplitude of the signals of the plurality of high-voltage signals may be preset such that the local fluid oscillations created in the vicinity of the electrodes of the first array by the signals supplied to the electrodes create together the fluid wave to be generated by the flow forcing unit. The phase of the signals, in particular of at least a part or every signal, of the plurality of high-voltage signals may be preset such that the signals may have a predetermined phase relation. The phase relation may be a constant phase shift or a phase shift varying in time. The phase shift may be in the range from about 0 to about $2\pi$ or about an integer or rational multiple of $\pi$.

The high-voltage signals, in particular all high-voltage signals, may have a frequency in the range of about 1 to about 50 kHz. The modulation frequency may be greater than 0 and utmost about 500 Hz.

The signals, in particular all signals, of the plurality of high-voltage signals may be phase-lagged and/or time-lagged with respect to each other.

In a further specific embodiment of the flow forcing unit, the waveform of the fluid wave substantially along the first axis may correspond to the composition of the plurality of high-voltage signals supplied to the electrodes of the first array of electrodes of the first electrode arrangement substantially along the first axis.

In other words, the high-voltage signals supplied to the electrodes of the first array may create local plasma oscillations in the fluid which, when considered together, form the fluid wave in the operated fluid.

Additionally or alternatively, the flow forcing unit may be configured such that at least three, preferably four, signals of the plurality of high-voltage signals supplied to the first array may have a different phase and the same or a different amplitude. The at least three signals may for example be phase-shifted or phase-lagged with respect to each other such that the fluid, in particular the motions in the fluid caused by the plasma discharges, may be caused to oscillate in form of a stationary or traveling sinuous or varicose wave oriented substantially along the first axis.

Advantageously, according to the above-mentioned further embodiment, various practicable periodic fluid waves may be generated in the fluid, the particular fluid wave being appropriate to yield a drag reduction, in particular the largest drag reduction, or drag enhancement. The device-induced flow can also lead to the reduction or the enhancement of the heat flux between the flow and the flow-exposed surfaces or to improve the mixing of flows and flows with particles.

The at least three signals supplied to the first array may be phase-shifted or phase-lagged with respect to each other such that the fluid, in particular a plasma created in the fluid, may be caused to oscillate in form of, for example, a stationary or traveling sinuous or varicose wave oriented substantially along the first axis.

Advantageously, thereby, drag caused by a turbulent fluid flow may be reduced or enhanced very efficiently or the heat flux between the flow and the flow-exposed surfaces can be reduced or enhanced. In particular, various suitable waveforms may be approximately or substantially exactly produced.

In a further specific embodiment of the flow forcing unit, all signals of the plurality of high-voltage signals may correspond to the same preset mathematical function or functions.

The mathematical function may be a sine or a cosine or any appropriate periodic function. The mathematical function may also include a modulation. The mathematical function may be a modulated sine or a modulated cosine function or a modulation of any appropriate periodic function.

The shape of the induced flow may depend on the first electrode arrangement, in particular on the arrangement of the first array of electrodes with respect to each other and/or in relation to the reference electrode.

In a further specific embodiment of the flow forcing unit, the flow forcing unit may be connected to or comprise at least one high-voltage supplier. Each high-voltage supplier of the at least one high-voltage supplier may be configured to supply one high-voltage signal of the plurality of high-voltage signals to the electrodes of the first array.

Advantageously, according to this embodiment, when the flow forcing unit, and hence the device, comprises at least one high-voltage supplier, the device can be integrated or arranged where needed more easily. The device does not need further wirings to one or more external voltage sources to power the device.

In an embodiment, the flow-forcing unit may comprise one high-voltage supplier. A high-voltage quick switch configured to do phase-lagging of the plurality of high-voltage signals may be provided between the high-voltage supplier and the electrodes of the first array. The high-voltage supplier may supply all the signals of the plurality of high-voltage signals to the electrodes of the first array if the high-voltage quick switch is provided.

In particular, the electrodes of the first array to which the same high-voltage signal is supplied, also referred to as electrode set, may further be connected in parallel to the same high-voltage supplier of the at least one high-voltage supplier.

The electrodes of the first array, in particular a part of or all the electrodes, may be supplied with a reference voltage or may be connected to a reference voltage source, such as Earth. The electrodes of the first array, in particular a part of or all the electrodes, may be grounded.

The flow forcing unit may have as many high-voltage suppliers as the device has electrodes in the first array of electrodes. Each of these high-voltage suppliers may be connected to one single electrode of all the electrodes in the first array of electrodes.

This keeps the electrical circuit of the device much simpler and the device may be constructed easily. The circuits can be made more easily.

In a further specific embodiment of the flow forcing unit, the flow forcing unit may be configured to supply one high-voltage signal of the plurality of high-voltage signals to the reference electrode. The flow forcing unit may be configured to supply multiple high-voltage signals of the plurality of high-voltage signals to the reference electrode. The reference electrode may also be connected to the ground by the flow forcing unit.

In a specific embodiment, the first electrode arrangement may further comprise a second array of electrodes disposed at the reference electrode, arranged substantially along the first axis and opposing the first array substantially along the second axis, wherein the reference electrode is insulated from the second array and all electrodes of the second array are insulated from each other.

All additional features and embodiments as described with reference to the first array of electrodes are also applicable to the second array of electrodes. In other words, the second array, in particular the electrodes of the second array, may have the same features as the first array, in particular the electrodes of the first array.

Additionally, the electrodes of the second array may be separated from electrodes of the first array by a gap, wherein the gap may in particular be filled with an insulating, in particular electrically insulating, medium. The electrodes of the first array and of the second array may be disposed substantially on opposite sides of the reference electrode along the second axis.

Additionally or alternatively, in a cross-sectional view of the device along the first axis, the electrodes of the first array and the electrodes of the second array may have an overlap with the reference electrode along the second axis. Along a third axis perpendicular to the first and second axis, at least a part of the reference electrode may be disposed below or above the first and second array of electrodes. The reference electrode may also be disposed between the first and second array so that, in said cross-sectional view of the device, the first and/or second array may have an overlap with at least a part of the reference electrode. Additionally or alternatively, the first and second array may have an overlap in said cross-sectional view of the device.

Herein, the electrodes of the first and/or second array of electrodes may also be referred to as "active electrodes".

In a specific embodiment, the electrodes of the first array may be encapsulated by the insulating substrate. Additionally or alternatively, the reference electrode may be encapsulated by the insulating substrate.

The electrodes of the second array may also be encapsulated by the insulating substrate.

In a specific embodiment, the device may further comprise a second electrode arrangement, wherein the first and second electrode arrangement may be arranged substantially in parallel to each other with respect to the reference electrode of each electrode arrangement of the first and second electrode arrangement.

Advantageously, including more than one electrode arrangement in the device allows for an increased performance of the device. The range and/or discretization and/or resolution of the oscillations associated to the waveform of the fluid wave to be generated in the fluid may be enhanced. Furthermore, the device may be more flexible in generating various fluid waveforms. Thus, the flow-exerted drag or the flow-surface heat fluxes or the flow mixing may be reduced or increased more efficiently and in a larger area.

All additional features and embodiments as described with reference to the first electrode arrangement are also applicable to the second electrode arrangement or any further electrode arrangement. In other words, the second electrode arrangement or any further electrode arrangement may have the same features as the first electrode arrangement.

The device may even comprise three, four, five, six and so on electrode arrangements, wherein each electrode arrangement may have one or two electrode arrays.

In an embodiment, the fluid wave may be a sinuous wave or a varicose wave.

In an embodiment, the device may be arrangeable at a wing of an aircraft. It may also be arrangeable at a body or fuselage of an aircraft. Furthermore, the device may be arrangeable at a body of a train or a car or a motorcycle or a ship or at blades of a wind turbine. Or, it can be arranged at the internal walls of a duct or pipe constraining a flow.

Advantageously, in the aforementioned embodiment, the device makes it possible to reduce or increase the drag caused by turbulent airflows over the device surface and/or the heat flux between the flow and the flow-exposed surfaces and/or the mixing of the flow.

Preferably, the device may be installed where a turbulent flow over a surface sets in. For example, with respect to a wing of an aircraft, a flow normally starts at the leading edge as laminar and becomes somewhere turbulent, evolving as such towards the trailing edge. Hence, the device may be installed on the surface of the wing where the turbulent flow sets in and evolves. In particular, said surface may be partially or completely covered by the device. The device may be arranged in a region between the leading edge and the trailing edge of a wing.

In an embodiment, the fluid may be a gas, in particular air, or a liquid.

In a specific embodiment, the fluid wave may be a sinuous wave or a varicose wave.

In a specific embodiment, each of the one or more electrode arrangements may be a dielectric barrier discharge plasma actuator or a corona plasma actuator. In the case of dielectric barrier discharge plasma actuators, the signals supplied to the electrodes may be determined by or include a carrier function and a modulation function. The carrier and modulation functions may have an amplitude, a frequency and a phase. While for the carrier function, the frequency and phase may be the same for all the signals of the plurality of signals supplied to plurality of electrodes, for the modulation function, the signals supplied to the plurality of electrodes of the same set may be set at the same phase. In the case of corona discharge plasma actuators, the plurality of voltage signals may be modulated direct-current (DC) signals where the signals supplied to the plurality of electrodes of the same set may be set at the same phase.

Preferably, each array of the first and/or second array of electrodes may comprise at least four electrodes.

The first array may comprise as many electrodes as the second array. The first array and the second array may each comprise three or more electrodes. The first array and second array may each comprise 3, 4, 5, 6, 7, 8, 9, 10, 11, 12, 13, 14, etc. electrodes. The more electrodes the first array and/or the second array has, the more precise a specific waveform of the fluid wave may be generated in the fluid. This is related to the discretization of the fluid wave by the number of involved signals and electrodes, in particular electrode sets, of the first and/or second electrode array.

In an embodiment, the reference electrode of the first and/or second electrode arrangement may be exposed to the fluid. In other words, the reference electrode may be in direct contact with either the flowing fluid or the static fluid. The reference electrode may be coated with a protection layer to prevent oxidation and/or damage of the reference electrode.

Additionally or alternatively, the first and/or second array of electrodes of the first and/or second electrode arrangement may be embedded in a first insulating layer disposed below the dielectric layer. The device may also comprise a second insulating layer disposed below the first insulating layer. The device may comprise multiple insulating layers disposed below the dielectric layer. The dielectric layers may allow for connecting the electrodes of the first and/or second array for all the arrangements while reducing or avoiding electromagnetic interference between electrodes and connections pertaining to different arrays of electrodes.

This may further increase the efficiency and/or performance of the device as discharges and voltage inductions on the electrodes of the first and/or second array of electrodes can consume power which is not spent to actuate a flow in a fluid. Also, the lifetime can be extended as these discharges can lead to a failure of the device. In other words, the performance of the device is improved.

The device may comprise means for being mounted for example to an aircraft, in particular to a wing of an aircraft, or to any other surface. The device may be screwed or glued onto a surface. The device may comprise an adhesive layer. The device may be constructed to conform to the curvature of the surface the device is to be mounted to. The device may for example be constructed to conform to the curvature of a wing of an aircraft.

Additionally or alternatively, the fluid may be a gas. The gas may in particular be air.

In an embodiment, the device may further comprise a frame or perimeter wall surrounding the one or more electrode arrangements. The frame or perimeter wall may comprise electrical connections and/or wirings, in particular to connect the flow forcing unit and the one or more electrode arrangements.

The flow forcing unit may be electrically connected to the one or more electrode arrangements.

A further aspect of the present invention relates to a method for flow forcing of a fluid, the method comprising the following steps:

- providing a device for flow forcing of a fluid, the device comprising:
  o a first electrode arrangement, in particular a set of dielectric barrier discharge plasma actuators or a set of corona discharge plasma actuators, the first electrode arrangement comprising:

  - a reference electrode having a length extending along a first axis and a width extending along a second axis perpendicular to the first axis;
  - a first array of electrodes disposed at the reference electrode and arranged substantially along the first axis; and
  - wherein the reference electrode is insulated from the first array and all electrodes of the first array are insulated from each other; and

- generating, in the fluid by the device, in particular the first electrode arrangement, when the electrodes of the first array and/or the reference electrode are supplied with a plurality of voltage signals:

  - a stationary fluid wave being aligned substantially along the first axis, oscillating substantially along the second axis and being stationary substantially along the first axis; or
  - a travelling fluid wave being aligned substantially along the first axis, oscillating substantially along the second axis and propagating substantially along the first axis.

Advantageously, the aforesaid method allows for precisely, efficiently and effectively forcing a fluid flow in a fluid, in particular controlling the flow of a fluid. By applying the above method, in particular drag caused by the flow of fluid may be reduced effectively, particularly by the interaction between the flow turbulence and the flow motions induced by the device. Alternatively or additionally, the heat transfer between the flow and the flow-exposed surfaces may be increased or reduced.

All additional features, embodiments and advantages described above with respect to the device may also be applied to the method according to the above-mentioned aspect of the present invention.

According to an embodiment, the method may be performed in the following order: In a first step, the device, in particular the device according to the above-mentioned respective aspect or any of the corresponding embodiments, may be provided. In a next step, in particular a final step, the fluid wave may be generated in the fluid by the device.

In a specific embodiment, the fluid wave may be generated by supplying, by a flow forcing unit, a plurality of voltage signals, being high-voltage signals, to the electrodes of the first array of electrodes of the first electrode arrangement, wherein each signal of the plurality of high-voltage signals may correspond to a preset mathematical function and have a preset phase and a preset amplitude and a preset frequency. The signals of the plurality of high-voltage signals may in particular have a phase relation with respect to each other corresponding to the preset phase of each signal of the plurality of high-voltage signals.

Alternatively, each signal of the plurality of high-voltage signals may correspond to preset mathematical functions and have preset phases and preset amplitudes and preset frequencies. The signals of the plurality of high-voltage signals may in particular have a phase relation with respect to each other corresponding to the preset phase of each signal of the plurality of high-voltage signals.

The plurality of high-voltage signals may correspond to preset mathematical functions and have preset phases, amplitudes and frequencies.

Advantageously, according to this embodiment, many different, in particular various practical, waveforms of the fluid wave may be generated. The electromagnetic fields that arise from supplying the high-voltage signals to the electrodes of the first array and/or the reference electrode create local fluid oscillations. The local fluid oscillations represent the discretization of a global fluid oscillation substantially along the first axis. The local fluid oscillations along the first axis constitute the global fluid oscillation or fluid wave. The electrodes of the first array as well as the reference electrode cause a local ionization of the operated fluid or gas molecules. The ionized particles are accelerated by the electric field and impact more electrically-neutral particles. This causes a localized, in space and time, jet. The sequence of jets may cause a streamwise-traveling or stationary wave of crossflow-directed motions. The term "local" is referred to jets which are the spatio-temporally-specific manifestation and cause of the global wave.

Further, the method may comprise the step of setting, by means of the flow forcing unit, the mathematical function and/or the phase and/or the amplitude and/or frequency of the plurality of high-voltage signals supplied to the electrodes of the first array of electrodes of the first electrode arrangement. Alternatively, the method may comprise the step of setting, by means of the flow forcing unit, the mathematical functions and/or the phases and/or the amplitudes and/or frequencies of the plurality of high-voltage signals supplied to the electrodes of the first array of electrodes of the first electrode arrangement.

Advantageously, thereby, many different, in particular various practical, waveforms of the fluid wave may be generated in the fluid. Moreover, by setting the mathematical function(s) and/or the phase(s) and/or the amplitude(s) and/or frequency(ies) of the plurality of signals, a fluid wave may be generated appropriately for the conditions in the fluid. For example, a fluid wave may be generated to compensate for or reduce the interaction of the flow turbulence with the flow-exposed surface, whereby drag caused by these interactions can be further reduced.

The setting step may be done by user input, for example at the flow forcing unit, in particular at a control unit of the device, and/or automatically, for example by the flow forcing unit, in particular by the control unit of the device. The control unit may be comprised by the device. The control unit may be comprised by the flow forcing unit or may be external to the flow forcing unit.

The setting step may further include modifying and/or adjusting the mathematical function(s) and/or phase(s) and/or amplitude(s) and/or frequency(ies) of the signals, in particular a part of the signals or all the signals, of the plurality of high-voltage signals, in order to change and/or adapt the fluid wave in reaction to changes in the fluid flow.

In an embodiment, the waveform of the fluid wave substantially along the first axis may correspond to the composition of the plurality of high-voltage signals supplied to the electrodes of the first array of electrodes of the first electrode arrangement substantially along the first axis. As already mentioned above, the term "the waveform of the fluid wave substantially along the first axis" may relate to fluid oscillations substantially along the second axis and evolution substantially along the first axis. Furthermore, the term "composition of the plurality of high-voltage signals supplied to the electrodes" may relate to the composition of the device-induced flow motions generated when the device electrodes are supplied with a plurality of high-voltage signals. The waveform of the fluid wave may correspond to the composition of the forced fluid jets caused by supplying the electrodes of the first array with the plurality of high-voltage signals. The term "jet" refers to spatio-temporally-specific manifestations of the induced fluid motions.

The oscillations of the fluid wave substantially along the second direction and phase plane of the fluid wave propagating substantially along the first axis may correspond to the composition of the plurality of high-voltage signals supplied to the electrodes of the first array substantially along the first axis.

The method may include the step of operating the device in one of the modes: sinuous-wave mode or varicose-wave mode. The method may further include changing the operation mode of the device.

A further aspect of the present invention relates to a use of the device according to the above-mentioned respective aspect and corresponding specific embodiments.

All additional features, embodiments and advantages described above with respect to the device may also be applied to the use according to the above-mentioned aspect of the present invention.

In the following, the drawings are described. The drawings show specific embodiments of the present invention. Individual features depicted in the drawings may be combined to yield further embodiments of the invention. In the drawings, it is shown:

**Figure 1:** a plan view or top-down view of an embodiment of a device according to the present invention;
**Figure 2:** a plan view or top-down view of an embodiment of a device according to the present invention;
Figure **3:** a plan view or top-down view of an embodiment of a device according to the present invention;
**Figure 4:** a plan view or top-down view of an embodiment of a device according to the present invention;
**Figure 5:** a plan view or top-down view of an embodiment of a device according to the present invention;
**Figure 6:** examples of four differential signals to operate an embodiment of the device according to the present invention;
**Figure 7:** one period of the ideal amplitude-envelope waves of figure 6;
**Figure 8:** a cross-sectional view of an embodiment of a device according to the present invention;
**Figure 9:** a schematic diagram of an embodiment of a device according to the present invention;
**Figure 10:** a photography of an embodiment of a device of the present invention; **Figures 11(a)** - **11(h):** cross-sectional views of further embodiments of a device according to the present invention;
**Figure 12:** a plan view or top-down view of an embodiment of a device according to the present invention;
**Figure 13:** a plan view or top-down view of an embodiment of a device according to the present invention;
**Figure 14:** a plan view or top-down view of an embodiment of a device according to the present invention;
**Figure 15:** a plan view or top-down view of an embodiment of a device according to the present invention; and
**Figures 16(a)** - **16(c):** a top-down view and cross-sectional views of further embodiments of a device according to the present invention.

In the following, all perspectives or views of the device are related to a three-dimensional orthonormal xyz coordinate system.

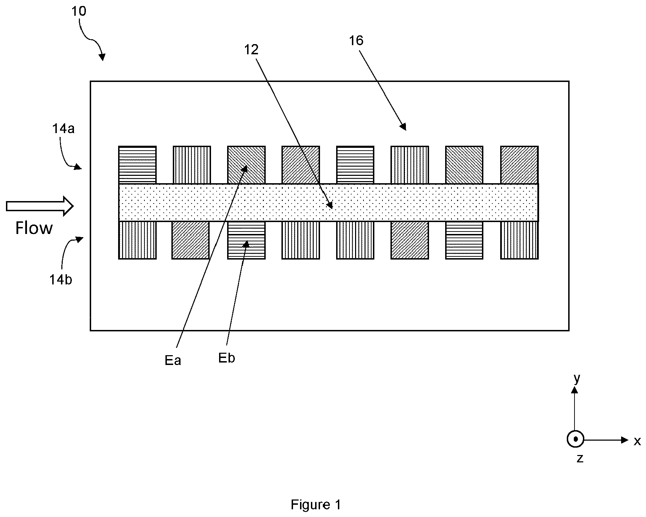

**Figure 1** shows a plan view or top-down view of an embodiment of a device according to the present invention in the xy-plane of the shown xyz coordinate system. Figure 1 shows a 4-phased sinuous-wave dielectric barrier discharge actuator configuration.

The device 10, hereinafter also referred to as actuator 10, shown in figure 1 comprises one electrode arrangement which comprises one reference electrode 12 having a length extending in x-direction of the shown xyz coordinate system. In the following, the x-axis corresponds to the "first axis" or streamwise axis/direction (as shown by the arrow "Flow"). The reference electrode has a width extending in y-direction of the shown xyz coordinate system, wherein, in the following, the y-axis corresponds to the "second axis" or crossflow axis/direction. The z-axis corresponds to the third axis or vertical direction.

Furthermore, the electrode arrangement comprises a first array of electrodes 14a and a second array of electrodes 14b. Both arrays are arranged in parallel along the first axis (x) on opposing sides of the reference electrode 12. The electrodes Ea and Eb of each array 14a and 14b oppose each other and are separated from each other by the reference electrode 12. The electrodes Ea and Eb of the first array 14a and second array 14b have square shape. However, any practicable shape of the electrodes of the first and second array 14a and 14b may be possible. The reference electrode 12 has a rectangular shape. However, any practicable shape may be possible. All the electrodes may have rounded corners. Opposing electrodes Ea and Eb of the first array 14a and second array 14b are arranged along the second axis (y). The device 10 is configured such that the reference electrode 12 is exposed to a fluid flow like an airflow when said flow flows over the device 10. The flow is depicted by the large left-right arrow on the left of figure 1. The reference electrode 12 is disposed on a dielectric layer or dielectric 16. The first array 14a and the second array 14b may be disposed below the dielectric layer 16. The first and second array may also be exposed to the operated fluid. The reference electrode 12 may be grounded, i.e. electrically connected to earth.

In more detail, figure 1 shows the electrodes configuration of the device 10 for forcing the flow by means of a streamwise-travelling, i.e. in x-direction or along the first axis, or stationary sinuous waves. The crossflow direction is associated with the y-axis or the second axis. The forced waveform is discretized in a finite number of phases. The dotted strip depicts the reference electrode 12 which may be connected to the ground. The four differently hatched squares repeating in the streamwise direction x represent four sets of the high-voltage electrodes Ea and Eb. These electrodes may be encapsulated by an insulating material. The electrodes Ea, Eb coded with the same hatching are supplied with the same signal, they can be connected in parallel to the same high-voltage supplier (not shown), and are therefore operated at the same phase of the forced discrete wave.

The shown schematics consider a configuration of the device to induce flow waves in the fluid discretized in four different phases.

The shown electrodes sequence encompasses two streamwise wavelengths but can further repeat in the streamwise direction for the desired streamwise extent. A layer of dielectric material 16 between the reference electrode 12 and the electrodes Ea and Eb can be installed if the device is constituted of dielectric barrier discharge, DBD, plasma actuators.

According to the configuration shown in figure 1, the forced wave will be represented by four discrete phases. A lower (N = 3) or higher-order discretization (N > 4) of the forced wave could still be envisioned. Four discrete phases are therefore considered with electrodes of the same set and supplied with the same signal coded with different hatchings in figure 1.

As shown in figure 1, the electrodes Ea of array 14a and Eb of array 14b on the two respective sides of the reference electrode 12 are staggered, featuring a phase shift of half the streamwise wavelength. This latter quantity can be expressed as $\lambda_x = N(g + l)$, where N is the number of the discrete phases of the forced wave, g and I are respectively the gap and the length between and of the electrodes Ea and Eb along the streamwise direction.

g and I may be as small as possible. The smaller these values, the smaller is the minimum possible forced wavelength. The smallest electrodes length may be on the order of 1 mm. The gap may be large enough to guarantee the isolation of neighboring electrodes. The gap depends on the isolation material between the electrodes.

The four differently-hatched electrodes of figure 1 may receive, as input, differently time-lagged high-voltage signals. In case the device is constituted of DBD plasma actuators, these may be:

$$A_1(t) = V_1\, G(w_{AC}t)\, F(f_wt,c),$$

$$A_2(t) = V_2\, G(w_{AC}t)\, F(f_wt \pm dT,c),$$

$$A_3(t) = V_3\, G(w_{AC}t)\, F(f_wt \pm 2dT,c),$$

$$A_4(t) = V_4\, G(w_{AC}t)\, F(f_wt \pm 3dT,c),$$

where each of the subscripts in the sequence from 1 to 4 is associated to one of the four different sets of electrodes (each indicated by a specific hatching) in the streamwise sequence of electrodes of figure 1. t is time. $V_i$ is the voltage amplitude of the i-th electrode set having the same hatching. G represents the carrier alternating-current (AC) function which may be a sine or cosine. The symbol F represents a preferably periodic modulation function. This is a step- up/down function defined in $t$ in $[0, 1/f_w]$ and with values defined in [0,1]. For the 4-phases configuration, this function actually can only have the values 0 and 1. And, accordingly, a given set of electrodes at a specific instant is either operated or not. Because of this, the hereby described operation mode may be referred to as burst mode.

The signals reported above are directly applicable in case the device is constituted of DBD plasma actuators. In case the device is constituted of direct-current plasma actuators, the function G from the signals presented above is not present.

Herein, the plurality of electrodes supplied with the same signal may also be referred to as electrode set.

The separation between two subsequent step-up (or step-down) edges defines the function period: $T = 1/f_w$. The portion of the period, in percentage value, where $F = 1$, represents the function duty cycle c which will be commented upon later. $dT = T/N$ is the time lag. $f_w$ is the modulation frequency. This corresponds to the induced-wave frequency as explained in the remainder. $f_w$ may be in the range of about 0 to about 500 Hz for the applications of interest.

$W_{AC}$ is the angular frequency of the AC plasma cycle peculiar of alternating-current actuators as the dielectric barrier discharge, DBD, actuators whose corresponding frequency may be in the range of about 1 to 50 kHz. The $\pm$ operator discriminates between downstream- (-) and upstream- (+) travelling waves.

The voltage amplitude of the time-lagged signals ($V_1... V_N$) could be, in principle, identical. Nonetheless, hardware differences, installation imperfections and potential induction effects between electrodes and connections narrowly spaced and featuring large voltage differences will require adjustable voltage amplitudes.

For the considered arrangement of figure 1 and input signals of the system of equations above, the forced wave is discretized in four phases shifted of: $dT = T/N = T/4$. In general, for a wave discretized by N phases, the generic i-th (where $1 \leq i \leq N$) electrode set will be supplied with the signal: $A_1(t) = V_i\, G(w_{AC}t)\, F(f_wt \pm (i - 1)dT,c)$.

The choice of the modulation-function F wave-form impacts the shape of the induced flow wave. Nevertheless, this is a secondary aspect as affecting the flow wave symmetry and skewness. Instead, the shape of the induced wave is mainly influenced by the electrodes configuration and by the provided signals. This will become more evident when other configurations, considering the same system of signals and the same modulation function but different electrodes' layout, will be discussed. For the considered arrangement and signals, the actuated wave will be a streamwise-traveling discrete sinuous-like wave inducing a flow field that can be described by:

$$Q'(x, y, z, t) = Q'_s(x, y, z, t)\, H_N(k_x x \pm f_w t) = Q'_s(x, y, z, t)\, H_N(k_x (x \pm c_w t)),$$

where Q' is the actuator-induced flow-velocity vectorial field. $Q'_s$ is the flow-velocity vectorial-field induced by an actuator made by a single active electrode Ea.

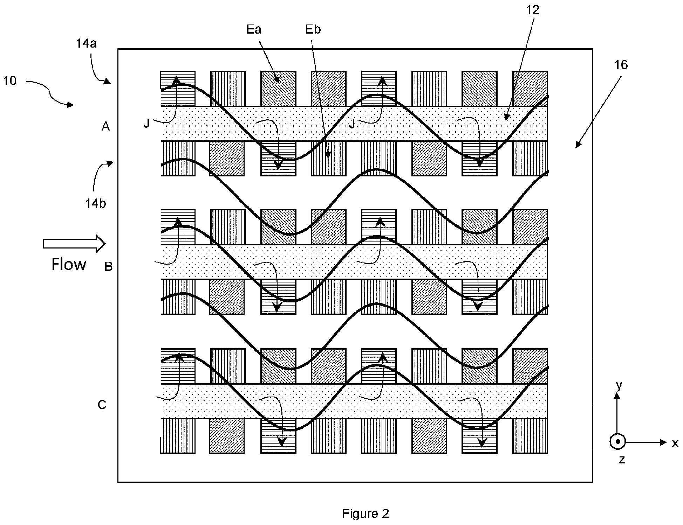

$H_N$ is a sinusoidal wave-form discretized in N phases and $c_w$ is the phase velocity of the induced flow wave. The - (+) sign corresponds to downstream- (upstream-) traveling waves (respectively). These aspects can be seen in the illustration of figure 2 where the device introduced in figure 1 is repeated twice (in total three) along the crossflow direction. It can be seen that the array of actuators introduces a train of parallel stationary or synchronously-traveling (along the positive/negative streamwise direction) discrete-sinuous waves in the considered flow and that the shape of the induced waves does not coincide with the choice of the modulation function F. Vice-versa, in case the position of neighbouring actuators would be shifted along the streamwise direction, the same shift will be reproduced in the induced waves.

For a given time instant, such a wave shows, at the streamwise location corresponding to an active electrode, a forced jet (see reference sign J in figures 2, 4 and 5) directed either along the positive or along the negative crossflow direction (y-axis). Respectively, a downwash suction will take place to supply the forced jet with the needed mass. The strength of this downwash changes with the motion of the operated fluid as flow advection will influence the mass supply of the forced jets.

The duty cycle of every electrode set should be the same if no further modulations are envisioned. For the considered 4-phases device 10, if c = 25%, at any time instant, only one set of electrodes is operated. This value of the duty cycle is referred to with the symbol $c^*$ and, for a generic N-phases actuator, $c^* = 100\%/N$. In general, this is not the only possible choice for c. In fact, it could be possible to have both a larger duty cycle ($c > c^*$) with time instants showing simultaneous plasma discharge from neighboring electrode sets, and smaller duty cycles ($0 < c < c^*$) where there will occur time instants between subsequent discharges with no electrode sets being operated. The choice of c is therefore related to the amount of energy one wants to deposit in the actuated fluid and to the wished shape of the forced wave, which may be a standing wave or a propagating wave, interacting with the surrounding fluid. This means that, for faster flows, advection will bring actuated fluid particles faster on the following (actuated) electrodes. Therefore, having faster flows and larger duty cycles can cause an excessive displacement of the actuated particles. The opposite holds for slower flows and smaller duty cycles. Consequently, the duty cycle is preferably to be chosen also considering the relative effect of flow advection and the physical embodiment of the actuator (for example, the electrodes' streamwise, i.e. in x-direction, and spanwise, i.e. in y-direction, spacing).

For a limit case of a stationary wave ($f_w = 0$), only one of the four electrode set operates at $A(t) = V\, G(w_{AC}t)$. The resulting actuator will introduce a stationary discretized sinusoidal wave of wavelength $\lambda_x$.

According to an embodiment, the actuator 10 can be operated also in the mode supplying all the electrodes Ea, Eb on one side of the reference electrode 12 with the $A_1(t) = V\, G(w_{AC}t)\, F(f_w t, c)$ signal and those on the other side with $A_2(t) = V\, G(w_{AC}t)\, F(f_w t + T/2, c)$, - imagine the actuator of figure 1, whose electrodes, on one side of the *refer*ence electrode 12 (Ea of array 14a) are all of one hatching and of another hatching at the opposite side of the reference electrode 12 (Eb of array 14b). This causes streamwise-uniform (despite the gaps between electrodes) plasma jets J directed towards either the positive or the negative crossflow direction, i.e. in or against y-direction, flipping with frequency $f_w$. Eventually, different modes of operation may also be envisioned.

In summary, figure 1 shows the schematics of the layout of the device 10 for streamwise, i.e., in x-direction or along the first axis, stationary or traveling sinuous-wave actuation. The reference electrode 12 is depicted with dots and may be connected to the ground. The dielectric or dielectric layer 16 is not hatched. The active electrodes (hatched squares) coded with the same hatching receive the same signal. Two streamwise wavelengths are shown.

**Figure 2** shows a plan view or top-down view of another embodiment of a device of the present invention. Figure 2 shows a sinuous-wave dielectric barrier discharge actuator configuration comprising three electrode arrangements A, B, C as shown in figure 1.

Repeating along the crossflow direction, i.e. in y-direction, the electrode arrangement of figure 1 introduces a train of parallel stationary or simultaneously-traveling (along the positive/negative streamwise direction, i.e. in x-direction) discrete-sinuous waves in the considered flow. This is shown in the schematic of figure 2 together with the plasma-forced jets J for one specific phase and the sinuous-shaped pattern induced to the flow.

The device 10 shown in figure 2 comprises three times the electrode arrangement of figure 1. It comprises three electrode arrangements A, B, C arranged in parallel. However, the dielectric layer 16 is not shown. The dielectric layer may be the same for all three electrode arrangements. Figure 2 shows the schematics of a sinuous-wave actuator 10, wherein the curved arrows extending from the reference electrode 12 represent the plasma-forced jets J at an exemplary time instant where only the electrodes hatched with horizontal lines are operated and the thick black lines illustrate the forcing effect.

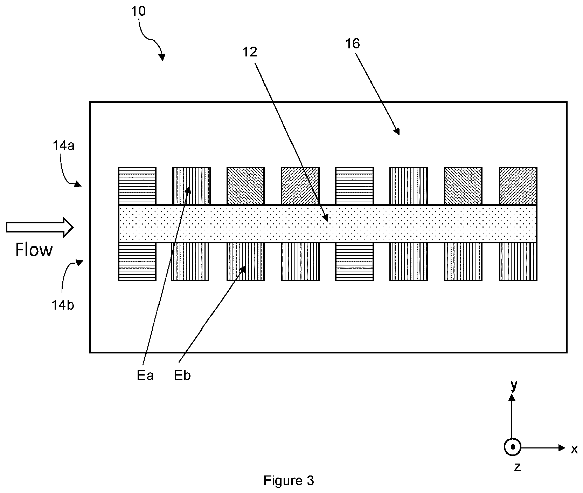

**Figure 3** shows a device 10, in particular an electrode arrangement, similar to the one shown in figure 1. It shows the schematics of a layout of a device 10 for streamwise stationary or traveling varicose-wave actuation. Figure 3 shows a varicose-wave dielectric barrier discharge actuator configuration.

The device 10 or actuator capable of this flow forcing is shown in figure 3, where, again, the shown sequence of electrodes can be further extended in the streamwise direction, i.e. in x-direction). When considering four discrete phases for the forced wave, the electrodes configuration is similar to the one of figure 1, still featuring a straight reference electrode 12 connectable to the ground, a dielectric layer 16 and four independently-powered (hatching coded) active electrodes Ea, Eb of figure 1.

The device 10 is configured such that the reference electrode 12 is exposed to a fluid flow like an airflow when said flow flows over the device 10. The flow is depicted by the large left-right arrow on the left of figure 1. The reference electrode 12 is disposed on a dielectric layer or dielectric 16. The first array 14a and the second array 14b may be disposed below the dielectric layer 16. The first and second array may also be exposed to the operated fluid. The reference electrode 12 may be grounded, i.e. electrically connected to Earth.

The only difference between the device of figure 1 and the device of figure 3 is the pattern of the active electrodes Ea, Eb on the two opposite sides (14a, 14b) of the reference electrode 12 which is, for this discrete-varicose wave actuator, symmetric with respect to the reference electrode 12.

To introduce a (discretized) varicose traveling wave, with the electrodes configuration shown in figure 3, the four electrodes' sets are fed with input signals identical to the ones presented in the system of equations mentioned above with respect to figure 1. For a given time instant, the forced varicose wave shows, at the streamwise location corresponding to an active electrode, two jets J directed along the positive and negative crossflow directions, i.e. in y-direction, respectively. Simultaneously, when operated in a quiescent fluid, two wall-normal suction jets nearly overlapping (depending on the width of the reference electrode 12), will take place to supply the forced jets with the needed mass.

To input a stationary ($f_w = 0$) varicose wave, only one every two electrode pairs along the streamwise direction can be powered with the $A(t) = V_{IN} \, G(w_{AC}t)$ signal.

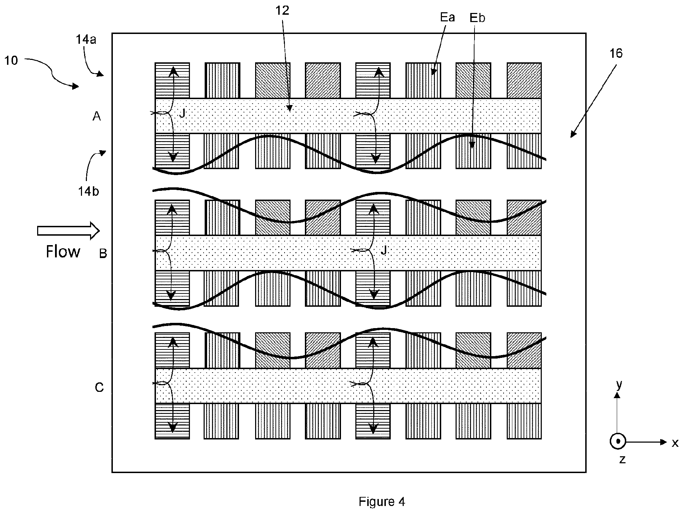

**Figure 4** shows another embodiment of a device 10 according to the present invention. Figure 4 shows a varicose, spanwise-in-phase (i.e. along the second axis) dielectric barrier discharge actuator configuration comprising three electrode arrangements A, B, C as shown in figure 3.

The device 10 shown in figure 4 comprises three electrode arrangements, wherein each electrode arrangement corresponds to the one shown in figure 3. Figure 4 shows the schematics of a crossflow in-phase (weak) varicose-wave actuator 10 (no dielectric layer 16 is shown). More than three electrode arrangements are possible to, for example, cover a larger surface.

Repeating the actuator 10, in particular the electrode arrangement, of figure 3 along the crossflow direction, i.e. in y-direction, (varicose-wave in-phase configuration) leads to spots, at a given streamwise position and time instant, of opposing jets J, placed at half the crossflow distance between the electrode arrangements A, B, C. Mass conservation will, therefore, force these two opposing jets to merge into an upwash motion placed roughly at half the electrodes' distance. For a given time instant, this occurs at the same streamwise position where the downwash motions take place on the reference electrode 12 to feed the forced jet with the needed mass. The schematic shown in figure 4 highlights the forced jets J for one specific actuation phase and the varicose-shaped flow-induced pattern. At the position shifted of $\pi$ with respect to the phase-specific operated electrodes, no opposite-direction forcing is present; i.e. the varicose-type modulation of the forced wave is not symmetric: while the outwards from the wave-centerline forcing is present, no inwards forcing is applied. The forcing modulation, therefore, does not fully replicate a varicose waveform as it relies on momentum diffusion in the flow regions between the actuated ones (horizontal-line hatching electrodes in figure 4). Because of this, this configuration is also referred to as the weak varicose-wave configuration. The occurrence and vicinity of these secondary wall-normal motions eventually complicate the induced flow field adding stronger three-dimensional vortical structures to the operated flow. These displace along the streamwise direction with the traveling-wave phase-velocity: $c_w = w_w/k_x$.

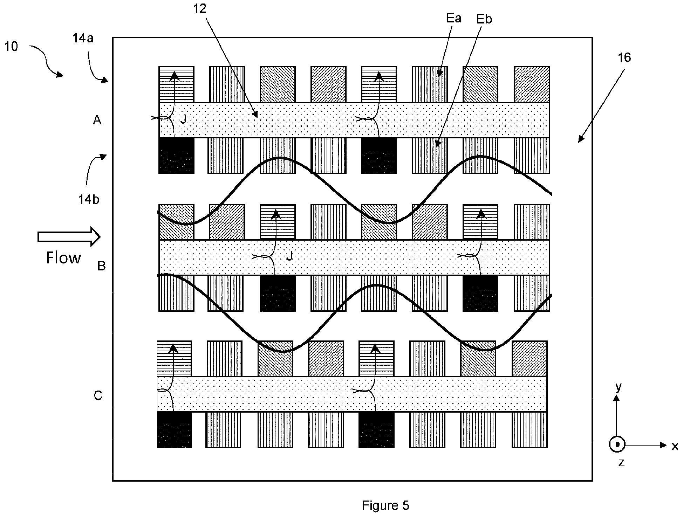

When instead neighboring electrode arrangements are set in counter-phase along the crossflow direction, i.e. in y-direction, a more defined (compared to the in-phase configuration) varicose-type of flow forcing can be achieved as, at the $\pi$-shifted position along one electrode arrangement, occurs the oppositely-directed forcing from the neighboring electrode arrangement thus featuring both the outwards and inwards induced jets to cause a (strong) varicose-wave modulation (see **figure 5).**

This configuration is shown in figure 5 for one specific phase. Furthermore, with this configuration, at any specific time instant, opposing jets J from A, B and C do not come from neighboring electrode arrangements. Consequently, a double distance between oppositely directed jets compared to the in-phase configuration is featured with this configuration. This has the further effect of weakening the interaction of the oppositely-directed jets and of the related upwash motions.

Accordingly, also the distance between downwash and upwash jets will double, likely resulting into weaker three-dimensional vortical structures induced in the operated flow. In fact, this configuration will reduce the injection of three-dimensional vortical structures (as caused by the varicose in-phase layout) and will much simplify (compared to the discrete-sinuous wave configuration described above with respect to figures 1 and 2) the device installation and the electrode connections.

A different mode of operation may be applied to all the configurations (sinuous, strong- and weak-varicose) of the present invention as shown in the figures 1 to 5.

This mode of operation is called 'beat mode'. This mode of operation is to be considered only in case the device is constituted of alternating-current plasma actuators as the DBD plasma actuators. In case the device is constituted of direct-current plasma actuators as direct-current corona discharge plasma actuators , this mode of operation cannot be considered.

For this operation mode, the reference electrode 12 of figures 1 to 5 is supplied with a high-voltage signal as well (indicated with the subscript t), therefore, requiring, for a 4-phases device and operation, a fifth high-voltage signal and related hardware (not shown). The AC frequency of the four sets of active electrodes is the same and is defined with the subscript e; whereas the reference electrode 12 is supplied with a signal oscillating with angular frequency $w_t$ not equal to $w_e$.

These frequencies are not too different and are in the same order of magnitude of $w_{AC}$ (as described above). In principle, the five sets of electrodes can receive the same voltage amplitude. Nonetheless, as previously mentioned, because of small differences related to the physical embodiment of the actuator, to the HV-suppliers' performance and to possible interferences between neighboring electrodes, the voltage amplitudes of the input signal might demand individual electrode sets voltage-amplitude adjustments. Finally, the signals supplied to the different sets of active electrodes are phase shifted to achieve the desired traveling-wave forcing, similarly to the burst mode previously described. The five HV signals for operating a 4-phased actuator in beat mode are presented in the system of equations:

$$A_t(t) = V^{IN}_t \, G(w_t t),$$

$$A_1(t) = V^{IN}_1 \, G(w_e t),$$

$$A_2(t) = V^{IN}_2 \, G(w_e t - dP),$$

$$A_3(t) = V^{IN}_3 \, G(w_e t - 2dP),$$

$$A_4(t) = V^{IN}_4 \, G(w_e t - 3dP),$$

where $dP = 2\pi/N = \pi/2$ as for the 4-phased actuator.

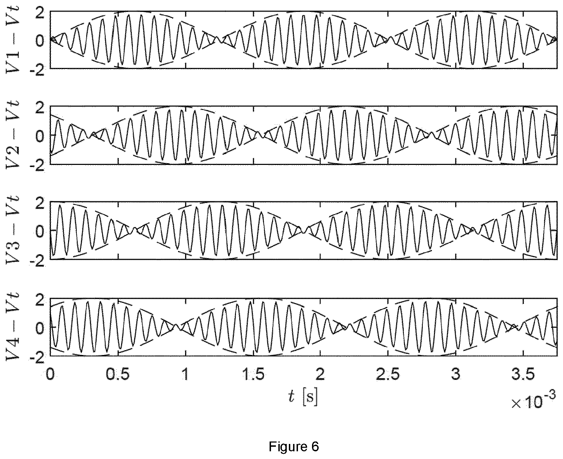

The resulting differential signals given by subtracting each of the four signals of the active electrodes with the signal supplied to the reference electrode 12 are plotted in **figure** 6. Figure 6 shows an example of four differential signals to operate a 4-phased device 10 in beat mode over three periods of the amplitude-envelope waves. The dashed lines show the ideal amplitude-envelope waves.

In the shown example, the frequency of the reference electrode signal $f_t = 2\pi w_t$ is set to 10.8 kHz, whereas the one of the active electrodes signal $f_e = 2\pi w_e$ is set to 10 kHz. The voltage amplitudes $V^{IN}_1 = V^{IN}_2 = V^{IN}_3 = V^{IN}_4 = V^{IN}_t$ were normalized to 1. The resulting differential signals reach the maximum amplitude of 2. They oscillate at a frequency equal to $(w_e + w_t)/2$ and are modulated in amplitude with a frequency equal to $w_e - wt$ (leading to a period of 1.25 ms for the considered example). The dashed lines in the figure correspond to the ideal amplitude-envelope waves of the i-th signal: $\pm 2 \, sin((w_e - wt)t/2 \pm (i-1)dP/2)$ and, in the perspective of the actuator as a whole, they show the phase-lag in order to induce a traveling wave. In case the frequency difference $w_e - w_t$ is positive (negative), as in the considered example, a downstream- (upstream-) traveling wave is induced (respectively).

The voltage difference to obtain plasma discharge is still a function of the relative distance of the electrodes from the two sides of the dielectric 16 and of the dielectric strength of the dielectric material and of the operated fluid. Therefore, the amplitude envelope shape before reaching this value does not correspond to the plasma evolution of the discharge intensity.

Nonetheless, once reached the threshold voltage, operating the actuator or device 10 in beat mode can provide a more gradual build-up of the electric field and related plasma discharge.

The inventors recognized that in a quiescent fluid, the lift-up effect caused by the sudden activation of the plasma discharge can be reduced when operating the actuator or device 10 in beat mode. This leads to an induced jet more aligned to the wall and further extending in the wall-parallel direction. These effects are positive for the purpose of turbulent-flow drag reduction.

Further, the inventors have recognized that the more gradual evolution of the plasma discharge proper of the beat mode operation can be beneficial for the endurance of the dielectric material. A further important effect when considering phased-plasma arrays operated in beat mode is that the induced flow effect can better approximate the intended continuous wave (compared to the injected discretized wave). In fact, for a given plasma-discharge threshold and specific time instant, different electrode sets could be operated.

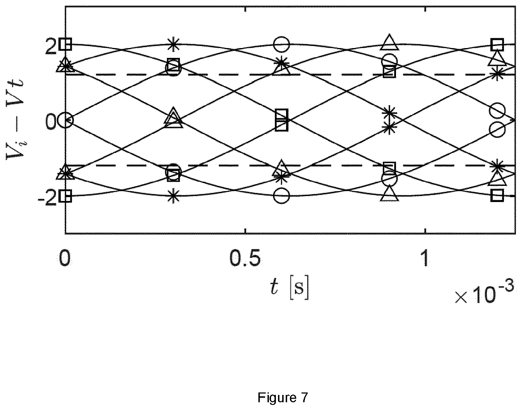

The aforesaid scenario is shown by means of the amplitude-envelope waves of figure 6 in **figure** 7. Figure 7 shows one period of the amplitude-envelope waves of figure 6 color-coded as the electrode sets of figure 1. The dashed lines represent an example of voltage amplitude threshold to enable plasma discharge for the considered actuator and operated fluid.

The plasma-discharge amplitude is arbitrary and illustrated with dashed lines. It can be seen that, at a given time instant, multiple (up to three for the 4-phased considered actuator) electrode sets are operated albeit at different phases of the modulation cycle and thus amplitudes. For this operation mode, the duty cycle for a single electrode set is therefore a function of the plasma-discharging threshold and of the number of phases considered for the discretized wave. The actuator or device 10, for operation in beat mode, comprises an extra high-voltage signal supplied to the reference electrode 12.

The above-described device 10 or actuator allows the forcing of flows by means of discretized sinuous or varicose, in particular in-phased or counter-phased along the crossflow direction, stationary or traveling waves. Moreover, multiple modes of operation of the mentioned types can be easily considered. Namely, these are referred to as burst mode and beat mode.

Changing the streamwise wavelength of the forced wave appears of very straightforward implementation for the device or actuator 10: not supplying one every M electrodes - while respecting one of the electrodes-signals sequences previously described - with the leading signal allows to force a wave of wavelength: $\lambda'_x = M\lambda_x$. The minimum possible wavelength instead depends on the possibility to miniaturize the active electrodes Ea, Eb, thus reducing their length I and the gap g among them.

The largest possible wavelength of the forced waves is instead a function of the actuator's or device's 10 streamwise extension.

Furthermore, the overall amount of plasma discharges, resulting from the chosen design parameters as: extent of the actuator or device 10, wavelength, streamwise and crossflow length of the plasma jets as well as their strength, relates to the high-voltage suppliers' available power.

Varying the frequency of the forced waves $w_w$ can be implemented by just changing the high-voltage suppliers input signals. Similarly, modifying the forced wave phase-velocity $c_w$ can be done, having control on both frequency and streamwise wavelength. Upstream-propagating waves ($c_w<0$) are also within the modal range accessible with the actuator or device 10 as described above. The actuator 10 can also introduce multiple modes in the underlying flow.

Changing the spacing along the crossflow direction between neighboring electrode arrangements A, B, C can be done: disconnecting or opening the connection of one every L reference electrode of the arrangements A, B, C, increases the crossflow spacing between neighboring electrode arrangements A, B, C of L.

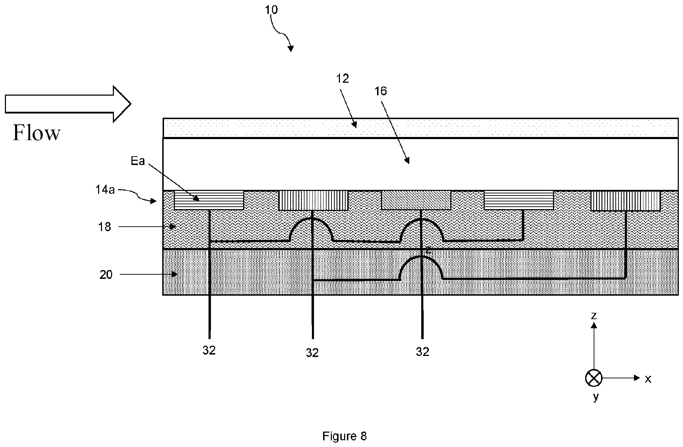

**Figure 8** shows a cross-sectional view of an embodiment of a device 10 according to the present invention. The device 10 may for example correspond to the device as depicted in figure 1. The cross-section shown in figure 8 is along the x-z plane of the above-mentioned xyz coordinate system.

As shown in figure 8, on top of the dielectric layer 16, the reference electrode 12 being exposed to the operated flow, which is oriented along the first axis or x-axis, is disposed. Below the dielectric layer 16, the insulated electrodes Ea/Eb are disposed and arranged along the first axis or x-axis. The electrodes Ea/Eb are embedded in or encapsulated by an insulating layer 18 (first insulating layer) below the dielectric layer 16. Furthermore, below the first insulating layer 18, there is also another optional insulating layer 20 (second insulating layer).

In figure 8, the active electrodes Ea of the array 14a are fully embedded into a dielectric resin 16 and the connections 32 stem out along the streamwise direction as shown in figure 8. This can facilitate the isolation of the electrodes connections 32. The reference electrode 12 may instead be of straightforward connection given its simple geometry and streamwise extension.

The wirings or connections 32 are disposed in the insulating layers to connect electrodes of the same sets and indicated by the same hatching, i.e. electrodes provided with the same HV-signal. In the shown embodiment, every third electrode is connected together. Connections 32 of different electrode sets, wherein the electrodes are provided with different HV-signals, may be insulated from each other by being disposed in and/or bridged with different insulating layers 18 and 20.

The dielectric 16 may comprise at least one of: Kapton, PET, PMMA, glass, aluminum-ceramic, or $Al_2O_3$. The electrodes Ea and connections 32 may comprise at least one of: copper, in particular tape or wires, silver, in particular paint or wires, or conductive paint.

In particular, the actuator or device 10 operated in varicose-wave mode has a simpler form or construction. Especially when having multiple electrode arrangements A, B, C for crossflow in-phase actuation, shown for example in figure 4, the active electrode connections 32 can be printed and/or manufactured as straight strips of conductive material aligned with the crossflow direction, i.e. orthogonal to the reference electrodes 12, directly connecting the electrode pairs of every electrode arrangement (see figure 4). When instead having electrode arrangements for crossflow counter-phased actuation, as shown for example in figure 5, for the N-phases wave discretization, the active electrodes Ea are connected by conductive segments skipping N/2 electrode pairs - thus allowing the $\pi$ jump previously described - in the streamwise direction every electrode arrangement A, B, C in the crossflow direction. For all configurations, the electrodes and related connections can be adequately isolated with dielectric material to avoid parasitic discharges. The more staggered layout of the electrodes pertaining to the same set peculiar of the sinuous-wave configuration, as shown in figure 2, may pose a bigger challenge in designing and realizing the electrode connections when compared to the varicose-wave configuration.

Grounding the reference electrode 12 simplifies the installation of the actuator or device 10. Furthermore, this choice preserves at best the small and narrowly spaced active electrodes from erosion, for example by the plasma discharge and/or by other agents. Furthermore, the reference electrode 12 can be printed and/or manufactured in a robust and simplified way allowing the most straightforward possibilities of its repair and/or substitution.

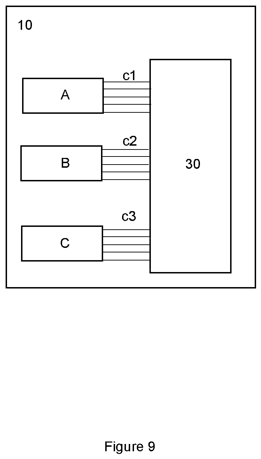

**Figure 9** shows a schematic diagram of an embodiment of a device 10 according to the present invention. The shown device 10 comprises three electrode arrangements A, B, C, each being electrically connected by five connections c1, c2, c3 to the flow forcing unit 30. The flow forcing unit 30 is configured to supply five different signals via the five electrical connections c1, c2, c3 to each of the three electrode arrangements A, B, C, and thus generate, in a fluid, a fluid wave.

Five connections are needed at least when considering the device arrangement with four discrete phases. In case the actuator is operated in burst mode, at least four connections are needed for the four active electrode sets and one for the reference electrode. In case the actuator is operated in beat mode, all the five connections will supply high-voltage signals.

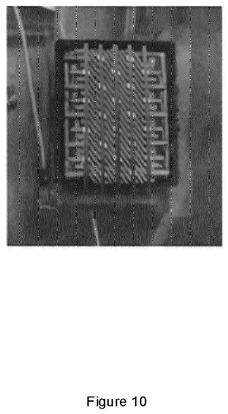

**Figure 10** shows a photography of a prototype of an embodiment of the device 10 according to the present invention in strong-varicose configuration (as shown in figure 5) while being operated. The plasma discharges can be seen at every intersection between the reference electrodes and the electrodes pertaining to the operated set. A flow forcing unit is not shown. Figure 10 may not be depicted differently.

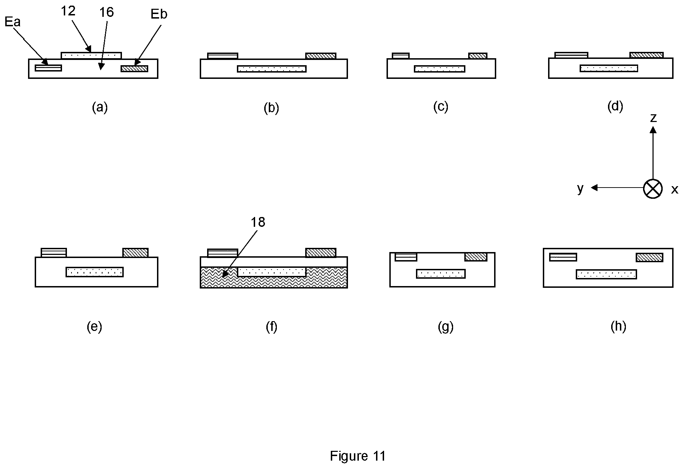

**Figures 11(a)** - **11(h)** show cross-sectional views of further embodiments of a device 10 according to the present invention.

According to figure 11(a), the reference electrode 12 may be exposed to its environment, namely a fluid or fluid flow. The electrodes Ea and Eb of the first array 14a and the second array 14b may be encapsulated by a dielectric 16 and disposed vertically below or above the reference electrode 12. According to figure 11(b), the electrodes Ea and Eb may be exposed and the reference electrode 12 may be encapsulated by the dielectric 16. According to figures 11(c) and 11(d), the electrodes Ea and Eb of the first array 14a and the second array 14b may be arranged in relation to the reference electrode 12 so that there may be a gap or gaps between the electrodes Ea and/or Eb and the reference electrode 12, respectively, or overlaps of the electrodes Ea and/or Eb with the reference electrode 12 along the second axis or horizontally. According to figures 11(e) and 11(f), the dielectric 16 may be formed of two layers which may be the same or of different materials. In other words, the device 10 may comprise an insulating layer 18 in addition to the dielectric layer 16. According to figures 11(g) and 11(h), all the electrodes (12, Ea, Eb) may be partially (figure 11(g)) or totally (figure 11(h)) encapsulated by the dielectric 16, wherein either the reference electrode 12 or the electrodes Ea and Eb may be flush-mounted with the upper surface of the dielectric 16. Either the electrodes Ea and Eb or the reference electrode 12 may also be disposed in the dielectric 16 slightly below the upper surface of the dielectric 16.

The dielectric 16 between the reference electrode 12 and the active electrodes Ea and Eb is needed when the device 10 is considered made of DBD plasma actuators. The dielectric 16 between the reference electrode 12 and the active electrodes Ea and Eb is not needed when the device 10 is considered made of corona-discharge plasma actuators.

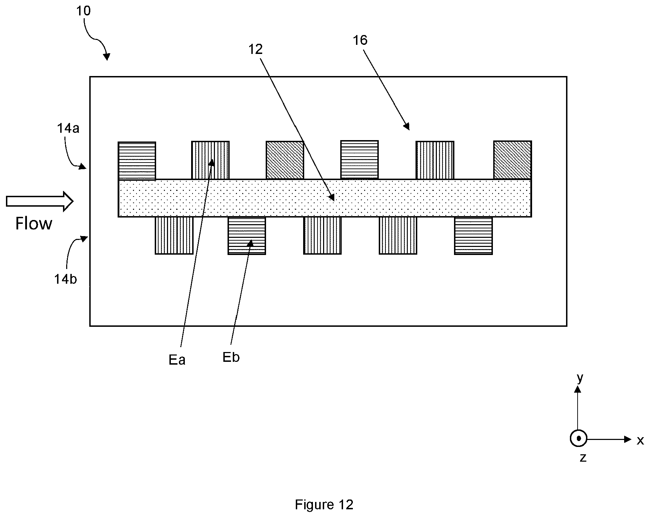

**Figure 12** shows a plan view or top-down view of an embodiment of a device 10 according to the present invention.

Figure 12 shows a 3-phased sinuous-wave dielectric barrier discharge actuator configuration, in which the electrodes Ea and Eb of opposing arrays 14a and 14b are arranged at the reference electrode 12 in a staggered or alternating fashion along the first axis. The electrodes of the first array 14a and the second array 14b do not have directly opposing electrodes along the second axis. This configuration allows the device 10 to generate stationary or traveling sinuous waves in the operated flow with only three discrete phases and signals.

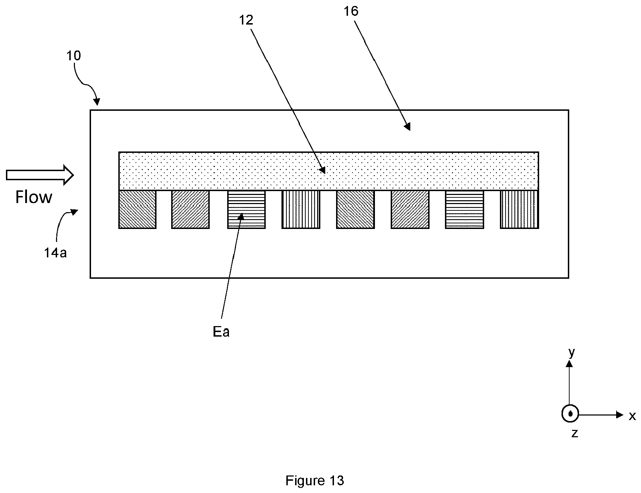

**Figure 13** shows a plan view or top-down view of an embodiment of a device 10 according to the present invention. Figure 13 shows a device 10, a 4-phased sinuous-wave dielectric barrier discharge actuator configuration, that comprises one electrode arrangement having only one electrode array 14a.

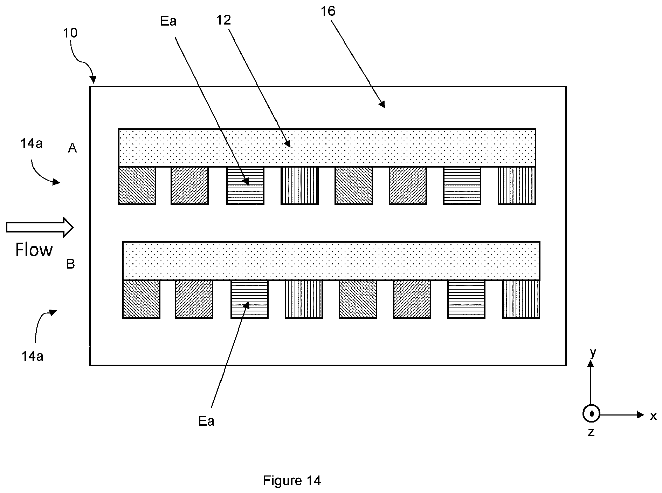

**Figure 14** shows a plan view or top-down view of an embodiment of a device 10 according to the present invention. Figure 14 shows a device 10, a 4-phased sinuous-wave dielectric barrier discharge actuator configuration, comprising two electrode arrangements A, B, each having only one electrode array 14a. The electrodes of the arrays 14a of each electrode arrangement A and B are arranged with respect to the shown perspective of the device 10 such that the electrodes are disposed on the same side of the respective reference electrode 12 of each electrode arrangement A and B.

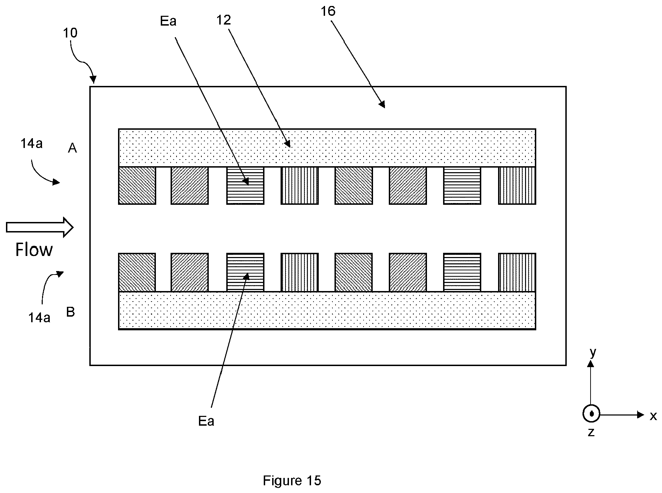

**Figure 15** shows a plan view or top-down view of an embodiment of a device 10 according to the present invention. Figure 15 shows a device 10, a 4-phased sinuous-wave dielectric barrier discharge actuator configuration, comprising two electrode arrangements A, B, each having only one electrode array 14a. The electrode arrangements A and B are inverted with respect to figure 14 so that the arrays 14a of each electrode arrangement A and B face each other with respect to the second axis.

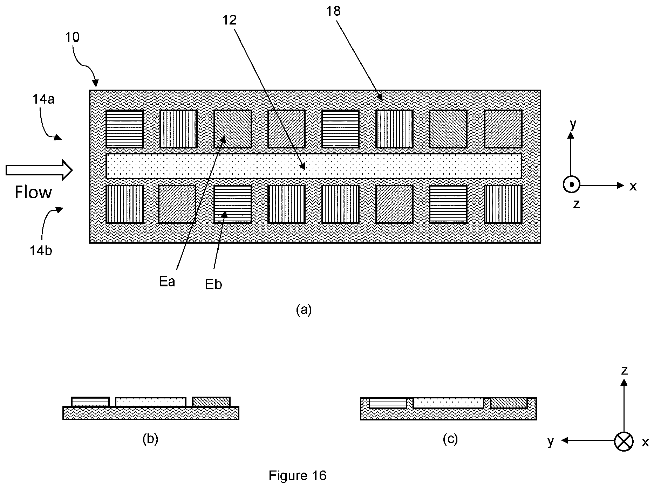

**Figures 16(a)** - **16(c)** show a top-down view and cross-sectional views of further embodiments of a device 10 according to the present invention.

Figure 16(a) shows a top-down view of the device 10 made of corona discharge, CD, plasma actuators. For CD plasma actuators, no dielectric is needed and both electrodes Ea and Eb and reference electrode 12 are exposed to the flow and have a gap between them where the discharge takes place. The electrodes are mounted at the same level along the wall-normal direction or second axis. The electrodes are mounted on an insulation layer 18 (wavy hatchings), i.e. the isolation 18 is placed beneath the electrodes. All the configurations and modes of operation discussed for DBD plasma actuators applies to CD plasma actuators too.

Figures 16(b) shows the situation where all the electrodes Ea, Eb and 12 are placed or mounted on the isolation layer 18 in a planar way with a gap between the electrodes. Figure 16(c) shows the situation where :the electrodes Ea, Eb and 12 are partially embedded in the isolation layer 18 and the regions of the electrodes which protrude from the isolation layer 18 are separated from each other by a gap. The gap may comprise air or vacuum.

In conclusion, herein, a device and a method for turbulent flows drag reduction have been described. The described device or actuator is capable of multi-modal flow forcing. For example by comprising, in particular spatially, isolated electrodes supplied with time-lagged high-voltage signals, stationary and traveling discretized sinuous and weak or strong varicose waves of different amplitude, streamwise wavelength, frequency, phase velocity magnitude and direction can be injected in the operated fluid. The spacing along the crossflow direction of neighboring electrode arrangements can be also adjusted. The device can force a broad spectrum of modes, leading to efficient drag reduction for a variety of flow regimes.

The device and method described herein, allow for inducing flow motions in a fluid and modulation of these motions. The spatio-temporal combination of the induced motions corresponds to waves induced in the fluid. The device and method allow for simply adjusting and/or modifying the parameters of said waves such as amplitude and/or wavelength and/or frequency and/or phase velocity magnitude and direction. By generating these waves in a turbulent flow by means of the above-described device and/or method, the drag caused by the interaction of the turbulent structures and the flow-exposed surfaces can be efficiently reduced. Moreover, the device can be constructed in a simple, straightforward, and cost-efficient way.

**Reference signs**

| | |
|---|---|
| 10 | device |
| 12 | reference electrode |
| 14a, 14b | first array of electrodes, second array of electrodes |
| Ea, Eb | electrode of the first array, electrode of the second array |
| 16 | dielectric layer |
| 18 | first insulating layer |
| 20 | second insulating layer |
| A, B, C | electrode arrangements |
| 30 | flow forcing unit |
| 32 | electrical connections/wirings |
| J | jet |

**Claims**

1. A device (10) for flow forcing of a fluid, the device comprising:

   - a first electrode arrangement (A), in particular a set of dielectric barrier discharge plasma actuators or a set of corona discharge plasma actuators, the first electrode arrangement (A) comprising:

      - a reference electrode (12) having a length extending along a first axis and a width extending along a second axis perpendicular to the first axis;
      - a first array (14a) of electrodes (Ea) disposed at the reference electrode (12) and arranged substantially along the first axis; and
      - wherein the reference electrode (12) is insulated from the first array (14a) and all electrodes of the first array (14a) are insulated from each other;

   - wherein the device (10), in particular the first electrode arrangement (A), when the electrodes (Ea) of the first array and/or the reference electrode (12) are supplied with a plurality of voltage signals, is configured to generate, in the fluid:

      - a stationary fluid wave being aligned substantially along the first axis, oscillating substantially along the second axis and being stationary substantially along the first axis; or

- a travelling fluid wave being aligned substantially along the first axis, oscillating substantially along the second axis and propagating substantially along the first axis.

2. The device (10) according to claim 1,

   wherein the device further comprises an insulating substrate (16), in particular a dielectric layer, at which the first electrode arrangement (A) is arranged; and/or
   wherein the first array (14a) comprises at least three, preferably four, electrodes (Ea); and/or
   wherein the electrodes (Ea) of the first array (14a) are separated from the reference electrode (12) by a gap, wherein the gap is in particular filled with an insulating, in particular electrically insulating, medium; and/or
   wherein, in a cross-sectional view of the device (10) along the first axis, the electrodes (Ea) of the first array (14a) have an overlap with the reference electrode (12) along the second axis.

3. The device (10) according to any one of the preceding claims,
   wherein the device (10) further comprises a flow forcing unit (30) being configured to supply the plurality of voltage signals being high-voltage signals, in particular periodic signals, to the electrodes (Ea) of the first array (14a), each signal of the plurality of high-voltage signals having a preset mathematical function and a preset phase and a preset amplitude and a preset frequency, wherein the signals of the plurality of high-voltage signals in particular have a phase relation with respect to each other corresponding to the preset phase of each signal of the plurality of high-voltage signals.

4. The device (10) according to claim 3,

   wherein the waveform of the fluid wave substantially along the first axis corresponds to the composition of the plurality of high-voltage signals supplied to the electrodes (Ea) of the first array (14a) substantially along the first axis; and/or
   wherein the flow forcing unit (30) is configured such that at least three signals of the plurality of high-voltage signals supplied to the first array (14a) have a different phase and the same or a different amplitude; and/or
   wherein all signals of the plurality of high-voltage signals correspond to the same preset mathematical function.

5. The device (10) according to any one of claims 3 to 4,

   wherein the flow forcing unit (30) comprises at least one high-voltage supplier, wherein each high-voltage supplier of the at least one high-voltage supplier is configured to supply one high-voltage signal of the plurality of high-voltage signals to the electrodes (Ea) of the first array (14a),
   wherein, in particular, the electrodes (Ea) of the first array (14a) to which the same high-voltage signal is supplied are connected in parallel to the same high-voltage supplier of the at least one high-voltage supplier.

6. The device (10) according to any one of claims 3 to 5, wherein the flow forcing unit (30) is configured to supply one high-voltage signal of the plurality of high-voltage signals to the reference electrode.

7. The device according to any one of the preceding claims, wherein the first electrode arrangement (A) further comprises a second array (14b) of electrodes (Eb) disposed at the reference electrode (12), arranged substantially along the first axis and opposing the first array (14a) substantially along the second axis, wherein the reference electrode (12) is insulated from the second array (14b) and all electrodes of the second array (14b) are insulated from each other.

8. The device according to claim 7, wherein the electrodes (Eb) of the second array (14b) are separated from electrodes (Ea) of the first array (14a) by a gap, wherein the gap is in particular filled with an insulating, in particular electrically insulating, medium; and/or
   wherein, in a cross-sectional view of the device (10) along the first axis, the electrodes (Ea) of the first array (14a) and the electrodes (Eb) of the second array (14b) have an overlap with the reference electrode (12) along the second axis.

9. The device (10) according to any one of claims 2 to 8, wherein the electrodes (Ea) of the first array (14a) are encapsulated by the insulating substrate (16) and/or the reference electrode (12) is encapsulated by the insulating substrate (16).

10. The device (10) according to any one of claims 7 to 9, wherein the electrodes (Eb) of the second array (14b) are encapsulated by the insulating substrate (16).

11. The device (10) according to any one of the preceding claims,

   wherein the device (10) further comprises a second electrode arrangement (B), wherein the first and second electrode arrangement (A, B) are arranged substantially in parallel to each other with respect to the reference electrode (12) of each electrode arrangement of the first and second electrode arrangement (A, B); and/or
   wherein the fluid wave is a sinuous wave or a varicose wave; and/or
   wherein the device (10) is arrangeable at a wing of an aircraft; and/or
   wherein the fluid is a gas, in particular air, or a liquid.

12. A method for flow forcing of a fluid, the method comprising the following steps:

   - providing a device (10) for flow forcing of a fluid, the device (10) comprising:

      o a first electrode arrangement (A), in particular a set of dielectric barrier discharge plasma actuators or a set of corona discharge plasma actuators, the first electrode arrangement (A) comprising:

         ▪ a reference electrode (12) having a length extending along a first axis and a width extending along a second axis perpendicular to the first axis;
         ▪ a first array (14a) of electrodes (Ea) disposed at the reference electrode (12) and arranged substantially along the first axis; and
         ▪ wherein the reference electrode (12) is insulated from the first array (14a) and all electrodes of the first array (14a) are insulated from each other; and

   - generating, in the fluid by the device (10), in particular the first electrode arrangement (A), when the electrodes (Ea) of the first array and/or the reference electrode (12) are supplied with a plurality of voltage signals:

      - a stationary fluid wave being aligned substantially along the first axis, oscillating substantially along the second axis and being stationary substantially along the first axis; or
      - a travelling fluid wave being aligned substantially along the first axis, oscillating substantially along the second axis and propagating substantially along the first axis.

13. The method according to claim 12, wherein the fluid wave is generated by:
   supplying, by a flow forcing unit (30), a plurality of voltage signals, being high-voltage signals, to the electrodes (Ea) of the first array (14a) of electrodes of the first electrode arrangement (A), wherein each signal of the plurality of high-voltage signals corresponds to a preset mathematical function and has a preset phase and a preset amplitude and a preset frequency, wherein the signals of the plurality of high-voltage signals in particular have a phase relation with respect to each other corresponding to the preset phase of each signal of the plurality of high-voltage signals.

14. The method according to claim 13, wherein the method further comprises the step:

   setting, by means of the flow forcing unit (30), the mathematical function and/or the phase and/or the amplitude and/or the frequency of each of the signals of the plurality of high-voltage signals supplied to the electrodes (Ea) of the first array (14a) of electrodes of the first electrode arrangement (A); and/or
   wherein the waveform of the fluid wave substantially along the first axis corresponds to the composition of the plurality of high-voltage signals supplied to the electrodes (Ea) of the first array (14a) of the first electrode arrangement (A) substantially along the first axis.

15. A use of the device (10) according to any one of claims 1 to 11 for flow forcing of a fluid.

Figure 1

Figure 2

Figure 3

Figure 4

Figure 5

Figure 6

Figure 7

Figure 8

Figure 9

Figure 10

Figure 11

10

12    16

14a

Flow

14b

Ea    Eb

y
x
z

Figure 12

Figure 13

Figure 14

Figure 15

(a)

(b)          (c)

Figure 16

Europäisches
Patentamt

European
Patent Office

Office européen
des brevets

# EUROPEAN SEARCH REPORT

Application Number

EP 22 19 3388

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 02/081303 A1 (BAE SYSTEMS PLC [GB]; SCOTT SIMON JOSEPH [GB] ET AL.) 17 October 2002 (2002-10-17) * page 5, line 28 - page 8, line 26; figures 1-3 * | 1-5,9, 11-15 | INV. F15D1/00 H05H1/24 B64C23/00 |
| A | WO 2021/216152 A2 (DEEP SCIENCE LLC [US]) 28 October 2021 (2021-10-28) * paragraph [0071] - paragraph [0085]; figures 1-3 * * paragraph [0086] - paragraph [0089]; figures 4-6 * * paragraph [0091] - paragraph [0093] * * paragraph [0095] - paragraph [0102]; figures 8-10 * | 1-15 | |
| A | US 2019/145443 A1 (SMULLIN SYLVIA JOAN [US] ET AL) 16 May 2019 (2019-05-16) * paragraph [0039] - paragraph [0071]; figures 1a-1c * * figure 4b * * figures 6-7 * | 1-15 | |
| A | US 2022/260098 A1 (SMITS ALEXANDER J [US] ET AL) 18 August 2022 (2022-08-18) * paragraph [0073]; figure 2a * * paragraph [0079] - paragraph [0080]; figure 3 * * paragraph [0096] - paragraph [0097]; figures 7a-7b * * paragraph [0101] - paragraph [0103]; figures 9-10 * | 1-15 | TECHNICAL FIELDS SEARCHED (IPC) F15D H05H B64C |
| A | EP 1 995 173 A1 (BOEING CO [US]) 26 November 2008 (2008-11-26) * paragraph [0022] - paragraph [0028]; figures 2-3 * | 1-15 | |

The present search report has been drawn up for all claims

| Place of search | Date of completion of the search | Examiner |
|---|---|---|
| Munich | 7 February 2023 | Díaz Antuña, Elena |

EPO FORM 1503 03.82 (P04C01)

## ANNEX TO THE EUROPEAN SEARCH REPORT
## ON EUROPEAN PATENT APPLICATION NO.

EP 22 19 3388

This annex lists the patent family members relating to the patent documents cited in the above-mentioned European search report.
The members are as contained in the European Patent Office EDP file on
The European Patent Office is in no way liable for these particulars which are merely given for the purpose of information.

07-02-2023

| Patent document cited in search report | | | Publication date | Patent family member(s) | | | Publication date |
|---|---|---|---|---|---|---|---|
| WO | 02081303 | A1 | 17-10-2002 | AT | 491635 | T | 15-01-2011 |
| | | | | EP | 1373066 | A1 | 02-01-2004 |
| | | | | US | 2004200932 | A1 | 14-10-2004 |
| | | | | WO | 02081303 | A1 | 17-10-2002 |
| WO | 2021216152 | A2 | 28-10-2021 | US | 2021348628 | A1 | 11-11-2021 |
| | | | | WO | 2021216152 | A2 | 28-10-2021 |
| US | 2019145443 | A1 | 16-05-2019 | NONE | | | |
| US | 2022260098 | A1 | 18-08-2022 | US | 2022260098 | A1 | 18-08-2022 |
| | | | | WO | 2022177960 | A1 | 25-08-2022 |
| EP | 1995173 | A1 | 26-11-2008 | AT | 485217 | T | 15-11-2010 |
| | | | | CN | 101318554 | A | 10-12-2008 |
| | | | | EP | 1995173 | A1 | 26-11-2008 |
| | | | | ES | 2350809 | T3 | 27-01-2011 |
| | | | | JP | 5255903 | B2 | 07-08-2013 |
| | | | | JP | 2008290709 | A | 04-12-2008 |
| | | | | US | 2010133386 | A1 | 03-06-2010 |

EPO FORM P0459

For more details about this annex : see Official Journal of the European Patent Office, No. 12/82